# EUROPÄISCHE PATENTSCHRIFT

(11) **EP 0 760 333 B1**
(45) Veröffentlichungstag und Bekanntmachung des Hinweises auf die Patenterteilung: **29.10.2003**
(21) Anmeldenummer: 96113429.3
(22) Anmeldetag: 21.08.1996
(51) Int. Cl.: B62J 11/00, B62H 5/00

(54) **Mitführbefestigung eines Zubehörteils an einem mobilen Objekt**
Attachment means for an accessory to a mobile object
Moyens de fixation d'un accessoire à un objet mobile

(30) Priorität: 01.09.1995 DE 19532383
(43) Veröffentlichungstag der Anmeldung: 05.03.1997
(73) Patentinhaber: Trelock GmbH, 48163 Münster (DE)
(72) Erfinder: Kortenbrede, Ludger, 48291 Telgte (DE)
(74) Vertreter: Fay, Hermann, Dipl.-Phys. Dr.

(56) Entgegenhaltungen:
- EP-A- 0 498 358
- EP-A- 0 566 857
- DE-A- 4 312 033
- US-A- 3 999 055

## Beschreibung

Die Erfindung betrifft eine lösbare Mitführbefestigung mit Zubehörteil, für die lösbare Befestigung des Zubehörteils mittels der Mitführbefestigung an einem Fahrzeug, nämlich einem Fahrrad, unter Verwendung eines fahrzeugseitigen Verrastungsmittels einerseits und eines zubehörseitigen Verrastungsmittels andererseits, wobei diese Verrastungsmittel bei Annäherung des zubehörseitigen Verrastungsmittel mit dem Zubehörteil im Zuge einer mittels einer Linearführung geführten Relativbewegung an eine Festlegeposition gegenüber dem fahrzeugseitigen Verrastungsmittel an dem Fahrzeug ineinander verrasten und wobei ein Löseorgan dem zubehörseitigen Verrastungsmittel zugeordnet ist.

Die EP 0 498 358 A1 zeigt eine lösbare Mitführbefestigung, durch die eine Frontlampe lösbar an einem Fahrrad befestigt werden kann, wobei die lösbare Mitführbefestigung sowohl Linearführungsmittel als auch Verrastungsmittel mit einem Löseorgan aufweist, das dem zubehörtseitigen Verrastungsmittel zugeordnet ist. Das Löseorgan ist duch einen federbeaufschlagten Schieber gebildet, an dem Rasthaken ausgebildet sind, die in Rastaufnahmen des fahrzeugseitigen Verrastungsmittels eingreifen. Der Schieber selber hat eine komplexe Gestalt, um ein Eintreten der Rasthaken in die Rastaufnahme beim Aufstecken des zubehörseitigen Verrastungsmittels auf das fahrzeugseitige Verrastungsmittel ermöglichen zu können und um auch das weitere Erfordernis zu erfüllen, diese Verbindung wieder zu lösen, wozu der Schieber in Führungsaufnahme geführt ist. Die Betätigung des Schiebers erfolgt bei Rechtshändern in der Regel durch den Daumen, wobei der Schieber in eine Richtung verstellt werden muß, die eine einhändige Bedienung verhindert oder zumindest bedeuten erschwert, weil der Daumen der rechten Hand blockiert ist und nicht benutzt werden kann, um das zubehörseitige Verrastungsmittel mit dem Zubehör zu ergreifen.

Die US 3 999 055 zeigt eine Vorrichtung, mit der ein Blitzlicht an eunm Kameragehäuse lösbar befestigt werden kann unter Ausnutzung von Verrastungs- und Linearführungsmitteln. Für die Befestigung des Blitzes an dem Kameragehäuse bzw. bei der Trennung der beiden Bauteile ist es zwingend erforderlich, beide Hände zu benutzen, wie es stets üblich ist, wenn Zubehör an einem Kameragehäuse befestigt werden soll, das mit der einen Hand ergriffen wird, während das Zubehör wie Objektive, Blitzlichter oder Batterypacks mit der anderen Hand ergriffen wird. Zu beachten ist auch, daß in technisch so unterschiedlichen Gebieten wie der Fahrzeug- und der Kameratechnik grundlegend andere Rahmenbedingungen vorliegen. So ist zu beachten, daß die lösbare Mitführbefestigung am Fahrzeug hohe Belastungen aushalten muß, wie diese vorliegen, wenn beispielsweise ein Mountainbike im Gelände eingesetzt wird, und die ein Kameragehäuse nicht im entferntesten aushalten muß.

Eine weitere Mitführbefestigung ist aus der EP-A-1 566 857 bekannt. Bei der bekannten Ausführungsform ist an dem Zweiradrahmen ein Zwischenkupplungsstück durch Klemmschellen befestigt. Das jeweilige Zubehörteil wird an dem Zwischenkupplungsstück, das nach erfolgter Montage für längere Zeit am Zweiradrahmen verbleibt, lösbar befestigt. Zur lösbaren Befestigung ist an dem Zwischenkupplungsstück eine hinterschnittene Führung angebracht, in welche ein T-förmiges Führungsglied des Zubehörteils eingeschoben wird. Im Verlauf des Einschiebens wird durch das T-förmige Führungsglied eine Verrastungsbiegefeder ausgelenkt, die am Zwischenkupplungsstück montiert ist. Bei fortgesetzter Einführung des T-förmigen Führungsglieds in die hinterschnittene Führung rastet dann die Verrastungsbiegefeder in einen Verrastungsschlitz des T-förmigen Führungsglieds ein. Damit ist das Zubehörteil am Zweiradrahmen so befestigt, daß es sich auch bei starken Vibrationseinwirkungen nicht mehr selbstständig lösen kann. Ist eine Lösung des Zubehörteils vom Zweiradrahmen beabsichtigt, so muß der Benutzer auf eines der Enden oder beide Enden der Verrastungsbiegefeder Fingerdruck ausüben mit der Folge, daß sich die Verrastungsbiegefeder im Sinne einer Aushebung aus der Verrastungsnut verbiegt, worauf dann das Zubehörteil mit dem T-förmigen Führungsglied aus der hinterschnittenen Führung wieder herausgeschoben werden kann.

Bei dieser Ausführungsform wird beanstandet, daß der Benutzer zur Lösung des Zubehörteils zum einen auf die Verrastungsbiegefeder einzuwirken hat, d. h. ein Element, welches an dem Zwischenkupplungsstück und damit am Zweiradrahmen rahmenfest angeordnet ist, und andererseits eine Schiebebewegung des Zubehörteils relativ zu dem Zweiradrahmen einzuleiten hat. Die Schiebebewegung muß dabei eingeleitet werden zu einem Zeitpunkt, zu dem eine Einwirkung auf die Verrasterungsbiegefeder noch erforderlich ist, d. h. es muß zur Lösung des Zubehörteils vom Zweiradrahmen jeweils eine Hand für die Beaufschlagung der Verrastungsbiegefeder im Sinne einer Lösung der Verrastung benutzt werden und eine zweite Hand zum Verschieben des Zubehörteils gegenüber dem Zwischenkupplungsstück und damit gegenüber dem Zweiradrahmen. Für diese Tätigkeit stehen aber nicht immer zwei Hände zur Verfügung: Man denke beispielsweise daran, daß eine Hand des Benutzers benötigt wird, um gleichzeitig die Position des Fahrrades oder der Lenkstange zu stabilisieren.

Der Erfindung liegt die Aufgabe zugrunde, eine lösbare Mitführbefestigung mit Zubehörteil so auszugestalten, daß bei einfacher Handhabung der Mitführbefestigung das Zubehörteil auch zur Sicherung des Fahrzeuges geeignet ist bei Beachtung der Randbedingungen, daß das Gewicht des Zubehörteils überwiegend durch dessen Sicherungsfunktion und nicht durch die Kopplung mit der Mitführbefestigung bestimmt ist.

Zur Lösung dieser Aufgabe wird erfindungsgemäß vorgeschlagen, daß das Zubehörteil von einem Fahrradschloß mit einem ein Schließwerk aufweisenden Kupplungsteil und mit einem in das Schließwerk einkuppelbaren Gegenschließstück gebildet ist, daß ein als ein Linearführungsdorn ausgebildetes fahrzeugseitiges Linearführungsmittel und ein Linearführungskanal an dem mit dem Schließwerk ausgerüsteten Kupplungsteil als ein zubehörseitiges Linearführungsmittel einer Linearführungsanordnung vorgesehen sind, und daß das Löseorgan als eine Drucktaste ausgebildet ist, die im wesentlichen orthogonal zur Linearführungsrichtung beweglich ist zur Betätigung des in den Linearführungskanal eindringenden zubehörseitigen Verrastungsmittel.

Bei der erfindungsgemäßen Ausbildung ist es beispielsweise möglich, durch Fingerbewegung einer Hand auf das Löseorgan einzuwirken und andererseits durch Bewegung dieser Hand als ganzer einer Trennbewegung des Zubehörteils gegenüber dem Zweiradrahmen auszuführen, wobei für eine definierte Anbau- und Trennbewegung des Zubehörteils relativ zu dem Fahrzeug gesorgt ist als eine weitere ergonomische Erleichterung für den Benutzer. Der mit dem Schließwerk ausgerüstete Kupplungsteil ist aufgrund seines Volumens und seiner Struktur geeignet, um an ihnen Verrastungsmittel und Linearführungsmittel anzubringen.

Die erfindungsgemäße Ausgestaltung hat den Vorteil, daß durch die Löseeinwirkung auf die Verrastung der Eingriff zwischen den Verrastungsmitteln, die ja grundsätzlich in der Linearführungsrichtung wirken müssen, nicht beinträchtigt und damit die Verrastungslösung erleichtert wird. Der Nachteil, daß bei dieser Ausgestaltung die Reibung in der Linearführungsanordnung vergrößert und damit die Trennbewegung in der Linearführungsanordnung erschwert wird, kann dadurch aufgehoben werden, daß der Benutzer gleichzeitig mit zwei Fingern einerseits an dem Löseorgan und andererseits an einem Abstützorgan für den zweiten Finger einwirkt.

Wenn von einer Mitführbefestigung die Rede ist, so ist diese grundsätzlich dazu bestimmt, das Zubehörteil am Fahrzeug in definierter Lage und möglichst wackelfrei festzuhalten. Es ist nicht notwendig, soll aber auch nicht ausgeschlossen sein, daß die Mitführbefestigung durch ein schließgeheimnisreagibles Sicherungsgerät so gesichert wird, daß nur Befugte eine Trennung von dem Fahrzeug vornehmen können, Befugte also, die entweder ein Schließgeheimnis kennen oder über einen Schließgeheimnisträger in Form eines Schlüssels oder einer Code-Karte verfügen. Ist eine solche schließgeheimnisreagible Sicherung vorhanden, so kann sie entweder die Betätigung des Löseorgangs oder die Trennbewegung des Zubehörteils gegenüber dem Fahrzeug beeinflussen.

Im Hinblick auf eine Nachrüstmöglichkeit ist weiterhin eine Gestaltung gemäß Anspruch 2 vorgesehen.

Das Zwischenkupplungsstück kann gemäß Anspruch 3 weitergebildet sein.

Im Hinblick auf eine die Benutzung des Zweirads möglichst wenig störende Anbringung des jeweiligen Schlosses am Zweiradrahmen werden bevorzugt geometrische Zuordnungen entsprechend den Ansprüchen 5 bis 9 gewählt. Man kann auf diese Weise erreichen, daß die Teile des Fahrradschlosses und seiner Befestigung wenigstens annähernd vollständig in einer durch den jeweiligen Zweiradrahmen definierten Raumscheibe liegen, wo sie während der Fahrt nicht stören können und insbesondere nicht in Kollision mit den Tretbewegungen ausführenden Beinen des Benutzers treten. Durch die Maßnahme des Anspruches 10 wird sichergestellt, daß die Verrastung beim Positionieren des Zubehörteils am mobilen Objekt zwangsläufig eintritt und für die Fremdeinwirkung auf die Verrastung nur eine einzige Einwirkungsrichtung erforderlich ist.

Die Maßnahme nach Anspruch 11 sorgt für eine leichte Zugänglichkeit des Löseorgans, wenn das Fahrrad in der richtigen Orientierung abgestellt ist. Selbst dann, wenn das Fahrrad in der falschen Orientierung abgestellt ist, das Löseorgan also "zur Abstellwand hinweist", lernt der Benutzer rasch die Lage des Löseorgans zu ertasten. Denkbar ist auch, saß man zwei einander gegenüberliegende, parallel wirkende Löseorgane vorsieht.

Unter Berücksichtigung der weiter oben erwähnten bevorzugten Zuordnung der Geometrie bedeutet Beweglichkeit des Löseorgans orthogonal zur Ebene des Zweiradrahmens, daß das Löseorgan entsprechend Anspruch 12 im wesentlichen orthogonal zu einer Schlingenebene eines Schließkabels beweglich ist.

Die bewegliche Anordnung des Löseorgans am Zubehörteil kann entsprechend den Ansprüchen 13 und 14 gestaltet sein.

Von der Handhabungsergonomie her erweist sich eine Gestaltung der Linearführung entsprechend den Ansprüchen 15 bis 17 als besonders vorteilhaft.
Herstellungstechnische Vorteile ergeben sich aus den Merkmalen der Ansprüche 18 und 19. Durch die Maßnahme der Ansprüche 20 und 21 wird eine weitere Vereinfachung der Benutzung erreicht, indem beim Anbringen des Zubehörteils am Fahrzeug nur noch eine Aufschiebebewegung erforderlich ist. Die Maßnahme des Anspruches 22 erlaubt es, mit einer einzigen Feder, beispielsweise einer Schraubendruckfeder oder auch einer Blattfeder, sowohl die Verrastung zu sichern als auch Wackelgeräusche zu vermeiden.

Gemäß Anspruch 23 wird das zubehörseitige Verrastungsmittel ggf. zusammen mit seinem Löseorgan an dem Körper oder Gehäuse des Zubehörteils dort angebracht, wo Unterbringungsmöglichkeiten und Schutz vorhanden sind. Wenn ein Gehäuse oder ein Körper des Zubehörteils aus Gußmasse, z. B. Kunststoff oder Zinkdruckguß, hergestellt ist, so lassen sich Führungselemente dort leicht herstellen. Die Montage des zubehörseitigen Verrastungsmittels und/oder des Löseorgans läßt sich dann entsprechend den Angaben des Anspruches 25 leicht vornehmen.

Eine bevorzugte Gestaltung für Führungsdorn und Führungskanal ergibt sich aus Anspruch 26. Dabei ist es möglich, daß durch Anfasen der Dornspitze die Prinzipien des Anspruches 30 leicht verwirklicht werden können.

Die beiliegenden Figuren erläutern die Erfindung anhand von Ausführungsbeispielen. Es stellen dar:
- Fig. 1: das Schema eines Zweiradrahmens mit abnehmbarem Kabelschloß;
- Fig. 2: eine vergrößerte Teilansicht zu Fig. 1;
- Fig. 3: das Schema der Linearführungsanordnung bei der Ausgestaltung nach Fig. 1;
- Fig. 3a: eine Ansicht in Pfeilrichtung IIIa der Fig. 3;
- Fig. 4: einen Schnitt nach Linie IV der Fig. 1 im Verrastungszustand;
- Fig. 5: einen Schnitt nach Linie V der Fig. 1 bei Trennung des schloßseitigen Verrastungsmittels vom Schloßkörper;
- Fig. 6: einen Schnitt entsprechend Fig. 4 und 5 in der Entrastungsstellung;
- Fig. 7: das Schließwerk eines Fahrradschlosses zum Einbau in einen Kupplungsteil eines Kabelschlosses gemäß Fig. 2, und zwar in Ansicht VII der Fig. 2;
- Fig. 8: eine alternative Gestaltung eines Spiralschlosses;
- Fig. 9: eine alternative Gestaltung des Löseorgans;
- Fig. 10: einen Schnitt nach Linie X der Fig. 9 und
- Fig. 11 und 12: weitere Ausführungsformen der Erfindung.

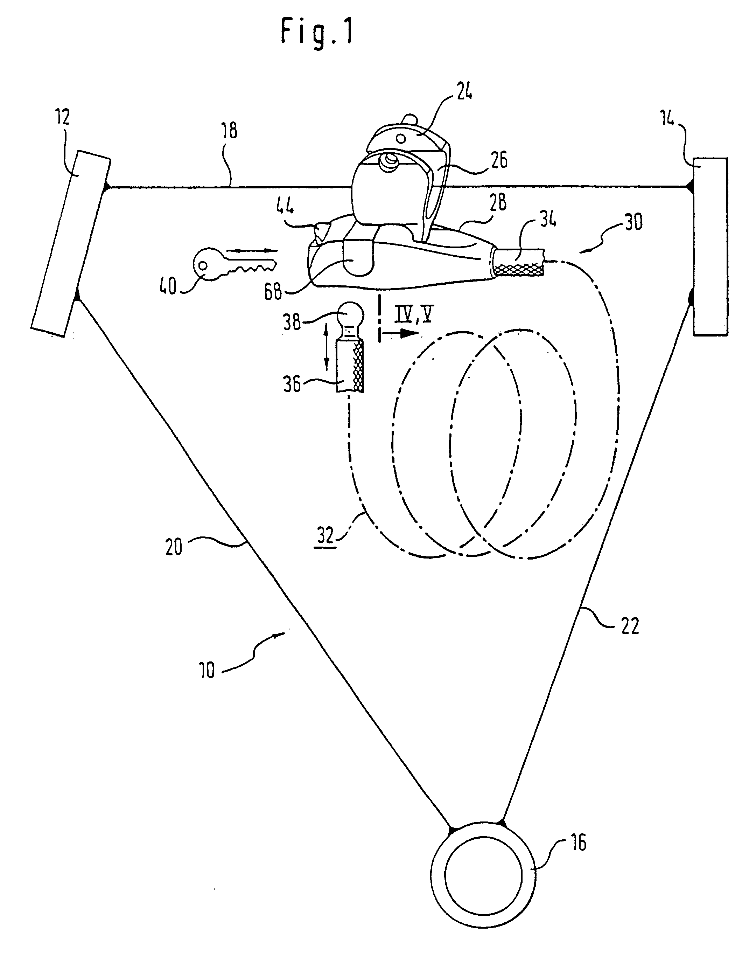

In Fig. 1 ist ein Fahrradrahmen schematisch mit 10 bezeichnet. Er weist ein Lenklager 12, ein Sattelrohr 14 und ein Tretlager 16 auf. Ein Spiralkabelschloß ist in der durch die Rahmenrohre 18, 20 und 22 definierten Raumscheibe untergebracht, und zwar so, daß etwaige seitliche Überstände über diese Raumscheibe minimiert und gleichmäßig verteilt sind. An einem der Rahmenrohre 18 - 22 - im Beispiel dem Rahmenrohr 18 - ist ein Zwischenkupplungsstück 24 mit einem Klemmschellenteil 26 befestigt. An diesem Zwischenkupplungsstück 24 ist der mit dem Schließwerk ausgerüstete Kupplungsteil 28 des Spiralkabelschlosses 30 gehalten. Das Spiralkabelschloß 30 umfaßt ein in mehreren Schlingen flachgelegtes und ebenfalls im wesentlichen innerhalb der Raumscheibe aufgenommenes Spiralkabel 32, das mit seinem einen Ende 34 in dem Kupplungsteil 28 fest verankert ist und an seinem anderen Kabelende 36 ein Gegenschließstück 38 zum Einkuppeln in den Kupplungsteil 28 aufweist. Das Gegenschließstück 38 kann durch Einführen eines Schlüssels 40 in den Kupplungsteil 28 und etwaiges Drehen gelöst werden.

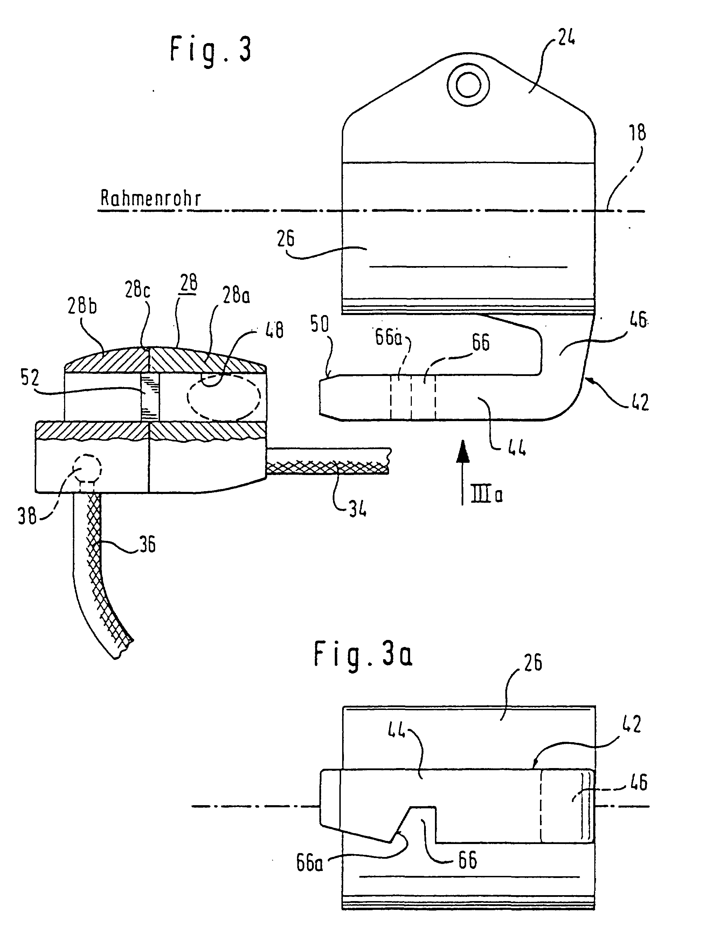

Fig. 3 zeigt ein zweiradseitiges Linearführungsmittel 42 mit einem Führungsdorn 44, der über einen kurzen L-Schenkel 46 am Zwischenkupplungsstück 24 fest angebracht ist und auf den ein Führungskanal 48 des Kupplungsteils 28 aufgeschoben werden kann. Die Querschnitte des Führungsdorns 44 und des Führungskanals 48 sind, wie gestrichelt in den Führungskanal 48 eingezeichnet, ellipsenförmig gestaltet, wobei die kurze Achse der Elliplse orthogonal zum Rahmenrohr 18 verläuft. Zum Mitführen des Spiralkabelschlosses 30 wird der Kupplungsteil 28 auf den Führungsdorn 44 aufgeschoben. Der Führungsdorn 44 ist zur Erleichterung des Aufschiebens bei 50 kegelstumpfförmig angefast. Nach einmal erfolgtem Einfädeln der Anfasung 50 in den Führungskanal 48 kann durch Drehen des Kupplungsteils 28 um die Achse des Führungsdorns 44 diejenige Relativlage der Ellipsenquerschnitte gefunden werden, in welcher der Kupplungsteil 28 dann weiter auf den Führungsdorn 44 aufgeschoben werden kann, bis der Kupplungsteil 28 an den Schenkel 46 anschlägt.

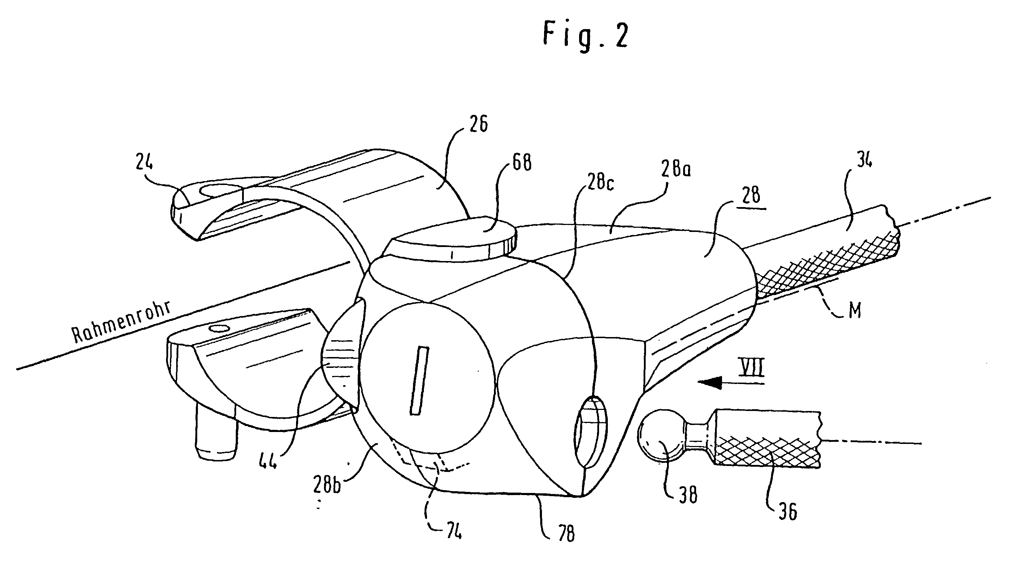

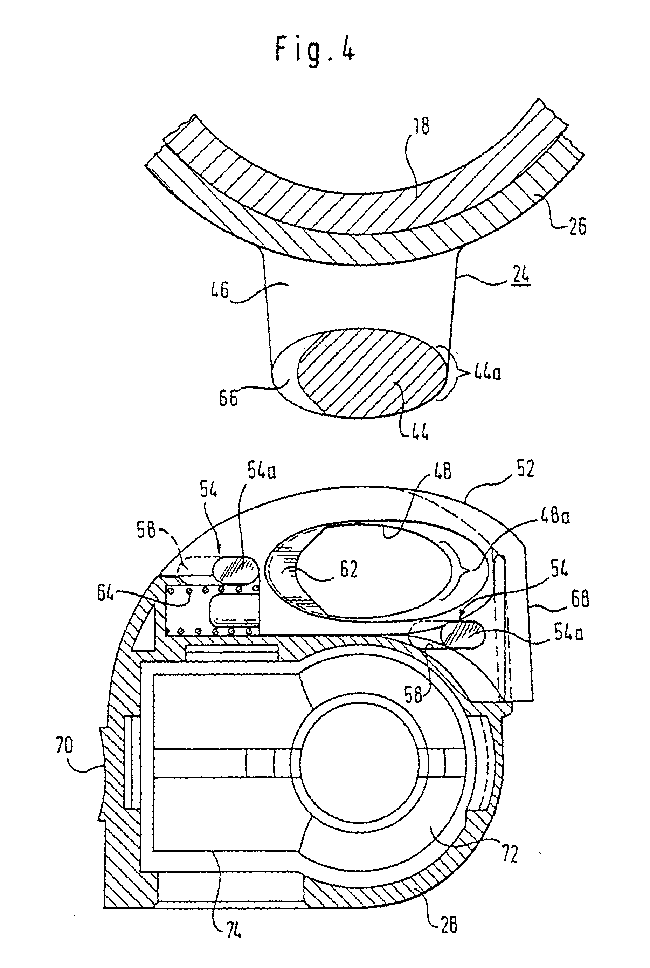

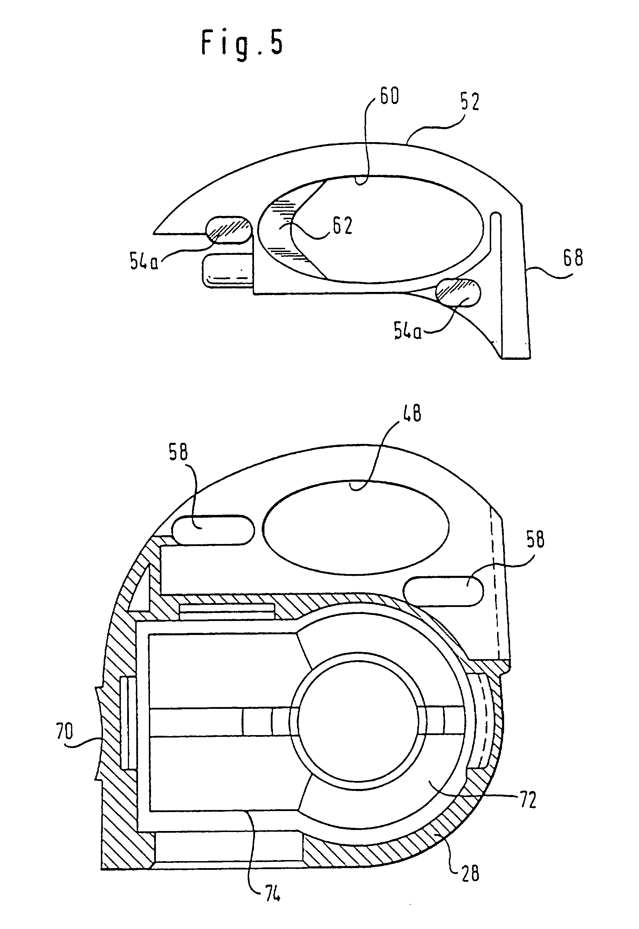

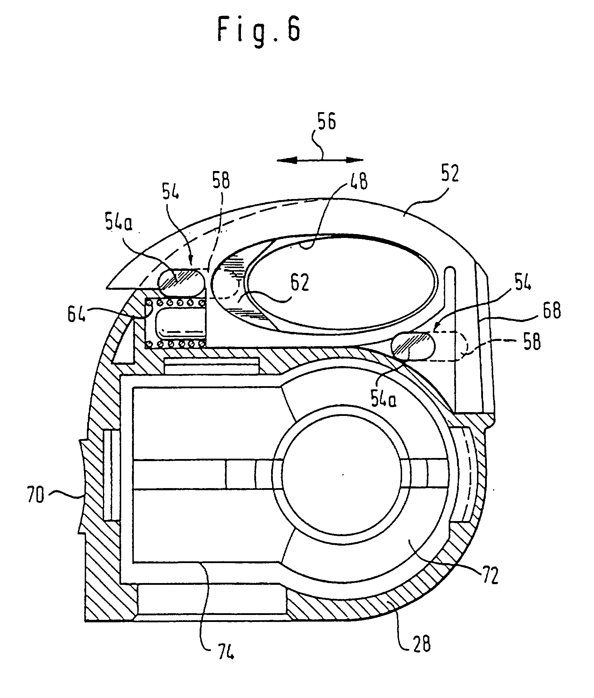

Gemäß Fig. 4, 5 und 6 ist an dem Kupplungsteil 28 ein Verrastungsmittel 52 angebracht. Dieses Verrastungsmittel 52 ist an dem Kupplungsteil 28 durch eine Geradführung 54 in Pfeilrichtung 56 verschiebbar geführt. Dabei ist die Geradführung 54 von Geradführungsnocken 54a des Verrastungsmittels 52 und Geradführungsschlitzen 58 des Kupplungsteils 28 gebildet. Das Verrastungsmittel 52 befindet sich, wie aus Fig. 2 zu ersehen, zwischen zwei Hälften 28a und 28b des Kupplungsteils 28, die längs einer Linie 28c zusammengesetzt und miteinander verklebt, verschweißt oder formschlüssig verbunden sind. Der Einbau des Verrastungsmittels 52 in den Kupplungsteil 28 erfolgt also, bevor dessen Hälften 28a und 28b miteinander verbunden werden. Das Verrastungsmittel 52 weist, wie aus Fig. 5 zu ersehen, eine elliptische Durchtrittsöffnung 60 auf, innerhalb welcher eine Verrastungsrippe 62 angebracht ist. Das Verrastungsmittel 52 ist, wie aus Fig. 4 zu ersehen, durch eine Schraubendruckfeder 64 in Richtung auf die Verrastungsstellung vorgespannt, die in Fig. 4 dargestellt ist. Es sei nun angenommen, daß der Führungskanal 48 ausgehend von dem Zustand gemäß Fig. 3 auf den Führungsdorn 44 aufgeschoben ist. Dann befindet sich das Verrastungsmittel 52, welches in Fig. 3 nur schematisch angedeutet ist, in Überdeckung mit einem Verrastungsschlitz 66, und die Verrastungsrippe 62 greift in den Verrastungsschlitz 66 des Führungsdorns 44 ein. Wenn das Kabelschloß von dem Zweiradrahmen gelöst werden soll, wird Fingerdruck auf eine Taste 68 am Verrastungsmittel 52 ausgeübt, so daß das Verrastungsmittel 52 insgesamt von der verrasteten Stellung der Fig. 4 in die entrastete Stellung der Fig. 6 wandert und damit die Verrastungsrippe 62 aus dem Verrastungsschlitz 66 ausrastet. Der Fingerdruck wird in der Weise angelegt, daß der Daumen einer Hand auf die Lösetaste 68 einwirkt, während der Zeigefinger der gleichen Hand auf eine Abstützfläche 70 einwirkt, so daß sich die auf die Taste 68 und die Abstützfläche 70 ausgeübten Kräfte innerhalb des Kupplungsteils 28 kompensieren und keine wesentliche Reibung zwischen dem Führungskanal 48 und dem Führungsdorn 44 auftritt. Der Kupplungsteil 28 kann dann von der gleichen Hand, deren Fingern auf die Lösetaste 68 und die Abstützfläche 70 einwirken, von dem Führungsdorn 44 abgezogen werden.

Um den Kupplungsteil 28 bei Beginn einer Fahrt wieder in Mitnahmeposition am Fahrrad festzumachen, wird einfach gemäß Fig. 3 der Führungskanal 48 auf den Führungsdorn 44 aufgeschoben, wobei die konische Anfasung 50 des Führungsdorns 44 schon vor dem Drücken der Lösetaste 68 an der Verrastungsrippe 62 vorbeitreten kann und danach die Verrastungsrippe 62 und die Lösetaste 52 insgesamt aus der Stellung gemäß Fig. 4 in die Stellung gemäß Fig. 6 zurückgedrückt werden solange, bis die Verrastungsrippe 62 in den Verrastungsschlitz 66 einfällt, die Verrastung herstellt und der Zustand gemäß Fig. 4 wieder hergestellt ist.

Wie aus Fig. 3a zu ersehen, ist der Verrastungsschlitz 66 mit einer etwas angeschrägten Flanke 66a ausgeführt, so daß die Verrastungsrippe 62 sich in dem Verrastungsschlitz 66 verkeilt und damit eine wackelfreie Sicherung des Kupplungsteils 28 hergestellt ist. Hinzu kommt, daß durch den Eingriff der Verrastungsrippe 62 in dem Verrastungsschlitz 66 unter der Wirkung der Schraubendruckfeder 64 der Führungsdorn 44 im Bereich 44a am Führungskanal 48a zur Anlage gebracht wird und damit ein Wackeln des Kupplungsteils 28 gegenüber dem Zwischenkupplungsstück weiterhin unterdrückt ist. (Fig. 4)

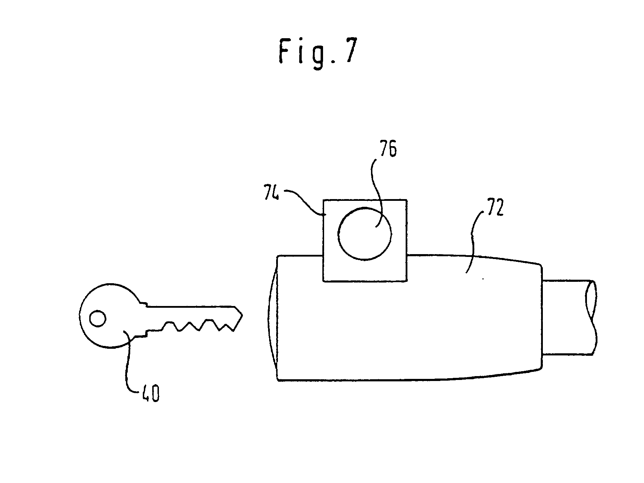

In Fig. 7 ist ein in das Kupplungsteil 28 eingebauter Schließwerkskörper mit 72 bezeichnet. Er weist einen Vorsprung 74 mit einer Öffnung 76 für die Einführung des Gegenschließstücks 38 auf. Vergleicht man nun Fig. 7 mit Fig. 2, so erkennt man in Fig. 2 eine Ausbauchung 78 des Kupplungsteils 28, welche den Vorsprung 74 des Schließwerkkörpers 72 aufnimmt. Die Mittelebene M des Kupplungsteils 28 liegt annähernd in der Mitte zwischen der Ausbauchung 78 und der Lösetaste 68 und fällt mit der Mittelebene der Raumscheibe innerhalb des Zweiradrahmens 22 gemäß Fig. 1 zusammen. Der Schließwerkkörper 72 ist in einem Kunststoffkörper des Kupplungsteils 28 aufgenommen.

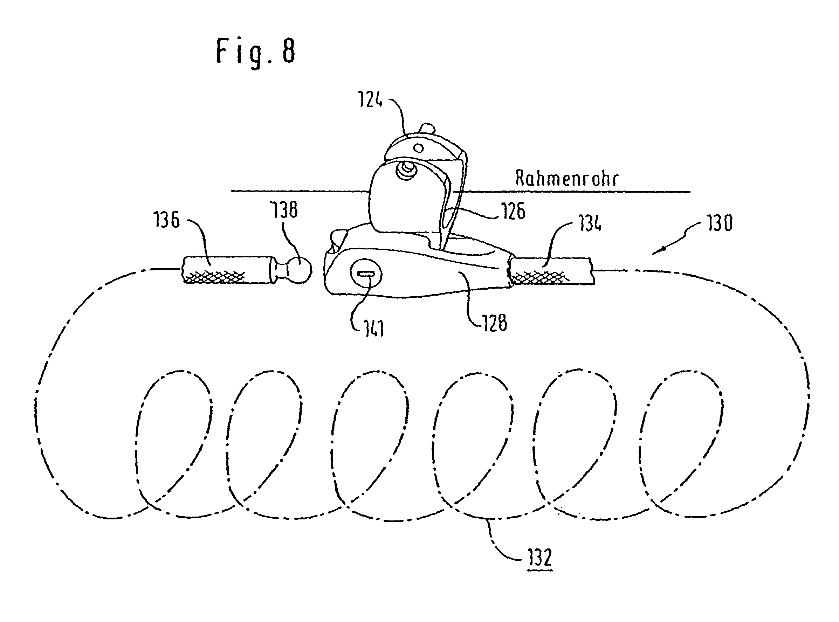

In Fig. 8 ist eine alternative Gestaltung eines Spiralkabelschlosses 130 dargestellt. Entsprechend der Ausführungsform der Fig. 1 umfaßt das Spiralkabelschloß 130 einen mit einem Schließwerk ausgerüsteten Kupplungsteil 128, welcher an einem Zwischenkupplungsstück 124 mit Klemmschellenteil 126 gehalten ist, sowie ein in mehreren Schlingen flachgelegtes und im wesentlichen innerhalb der Raumscheibe des Zweiradrahmens aufgenommenes Spiralkabel 132 aufweist. Das eine Ende 134 des Spiralkabels 132 ist in dem Kupplungsteil 128 fest verankert und läuft in Richtung der Längsachse des länglichen Kupplungsteils 128 in dieses ein. Das mit einem Gegenschließstück 138 versehene andere Kabelende 136 ist in den Kupplungsteil 128 einkuppelbar, und zwar antiparallel und fluchtend zu dem ersten Schließkabelende 134. Ein Schlüssel zum Lösen des Gegenschließstücks 138 kann seitlich, orthogonal zur Rahmenebene in einen Schlüsselschlitz 141 des Kupplungsteils 128 eingeführt werden. Die lösbare Befestigung des Kabelschlosses 130 an dem Zwischenkupplungsstück 124 erfolgt hier auf die gleiche Weise, wie vorstehend mit Bezug auf die Fig. 1 - 7 beschrieben wurde.

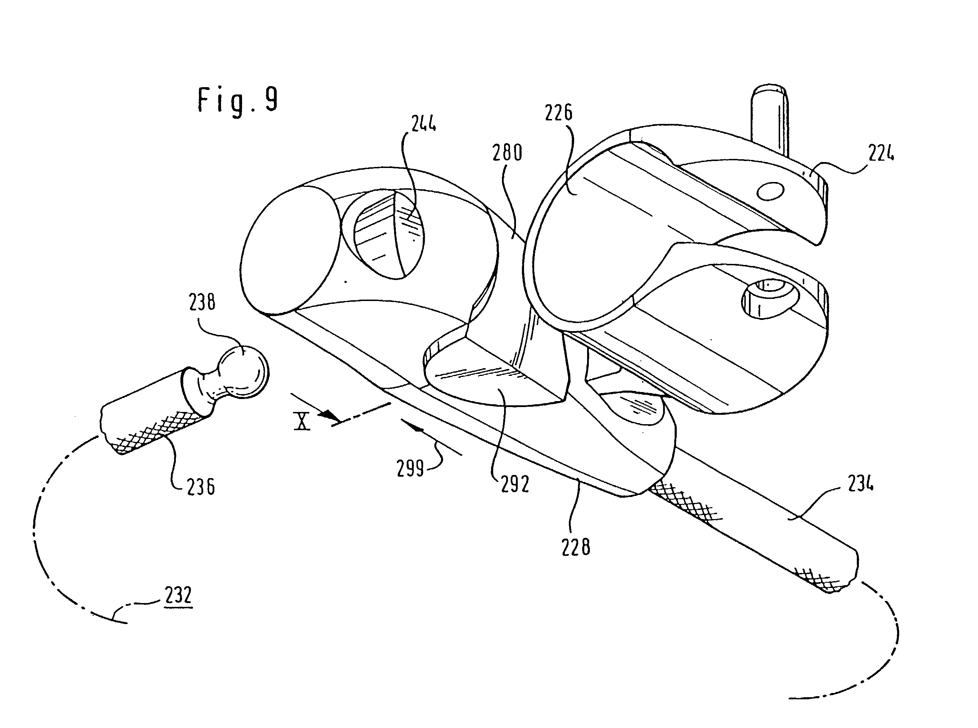

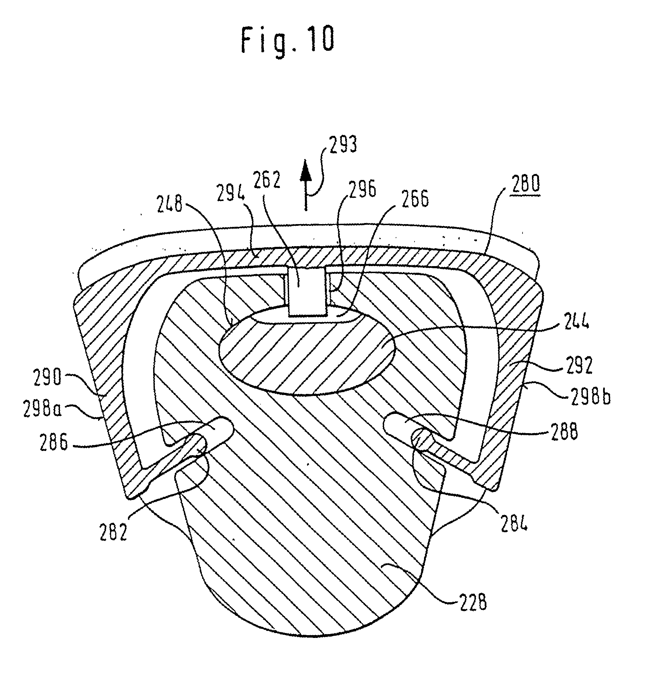

In den Fig. 9 und 10 ist eine alternative Gestaltung eines Löseorgans am Beispiel der in Fig. 1 gezeigten Ausführungsform des Spiralkabelschlosses gezeigt. Zwischenkupplungsstück 224 und Klemmschellenteil 226 sowie die Anordnung der Kabelenden 234, 236 des Spiralkabels 232 an dem Kupplungsteil 228 entsprechen jenen der Fig. 1. Sie sind deshalb mit den gleichen Bezugszeichen zuzüglich 200 versehen und werden nicht näher erläutert.

Eine Biegefeder 280 ist als Verrastungsmittel ausgebildet. Die Biegefeder 280 umgreift, wie im Schnitt in Fig. 10 zu erkennen, das Kupplungsteil 228 und ist mit ihren Enden 282, 284 in Führungen 286, 288 geführt. In dem Kupplungsteil 228 ist ein im Querschnitt elliptischer Führungskanal 248 ausgebildet, in welchem ein ebenfalls im Querschnitt elliptischer Führungsdorn 244 des Zwischenkupplungsstücks 224 eingeführt ist. Die Biegefeder 280 hat den in Fig. 10 dargestellten symmetrischen Längsschnitt, mit zwei Schenkeln 290, 292 und einem die Schenkel 290, 292 verbindenden Steg 294. An der dem Kupplungsteil 228 zugewandten Innenseite des Stegs 294 der Biegefeder 280 ist eine Verrastungsnase 262 ausgebildet, welche sich durch eine Öffnung 296 des Kupplungsteils 228 erstreckt und in einen Verrastungsschlitz 266 des Führungsdorns 244 eingreift, wodurch eine Relativbewegung zwischen dem Führungsdorn 244 und dem Kupplungsteil 228 unterbunden ist und somit eine Verrastung bewirkt wird.

Die Biegefeder 280 weist ferner zwei Drucktastflächen 298a und 298b an ihren Schenkeln 290, 292 auf. Zum Lösen der Verrastung wird die Biegefeder 280 an den Drucktastflächen 298a, 298b zusammengedrückt, wodurch sich zum einen die in den schräg nach oben verlaufenden Führungen 286, 288 geführten Enden 282, 284 einwärts und aufwärts bewegen und die Biegefeder 280 sich in Richtung des Pfeils 293 nach oben bewegt. Zum anderen wölbt sich der Steg 294 der Biegefeder 280 nach außen, so daß die Verrastungsnase 262 eine zusätzliche Bewegung in Richtung des Pfeils 293 erfährt und aus der Verrastungsausnehmung 266 und damit aus dem Führungskanal 244 ausgerückt wird. Der Kupplungsteil 228 läßt sich dann in Richtung des Pfeils 299 von dem Führungsdorn 244 abziehen. Die Herstellung der Verrastungsverbindung erfolgt analog zu den Fig. 1 - 8.

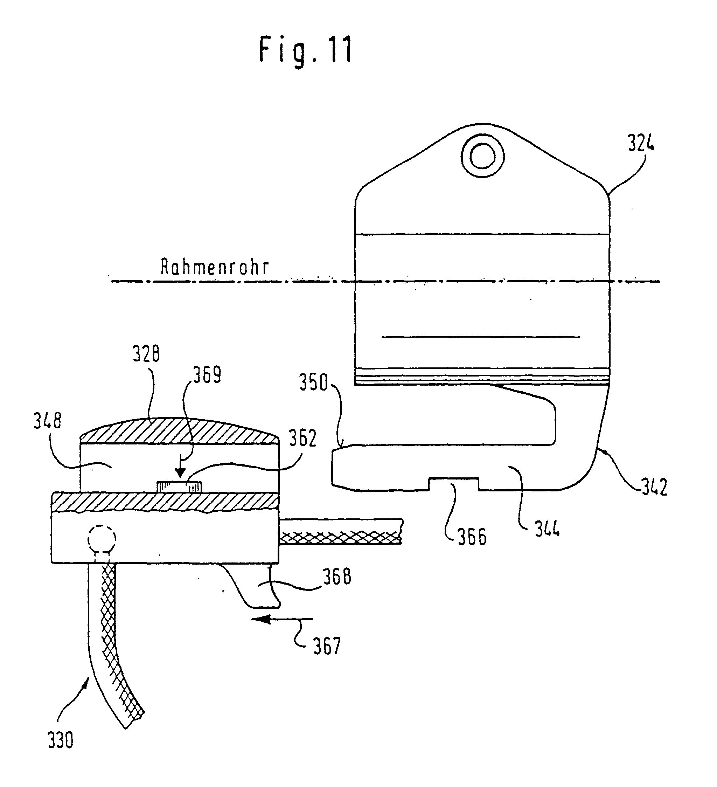

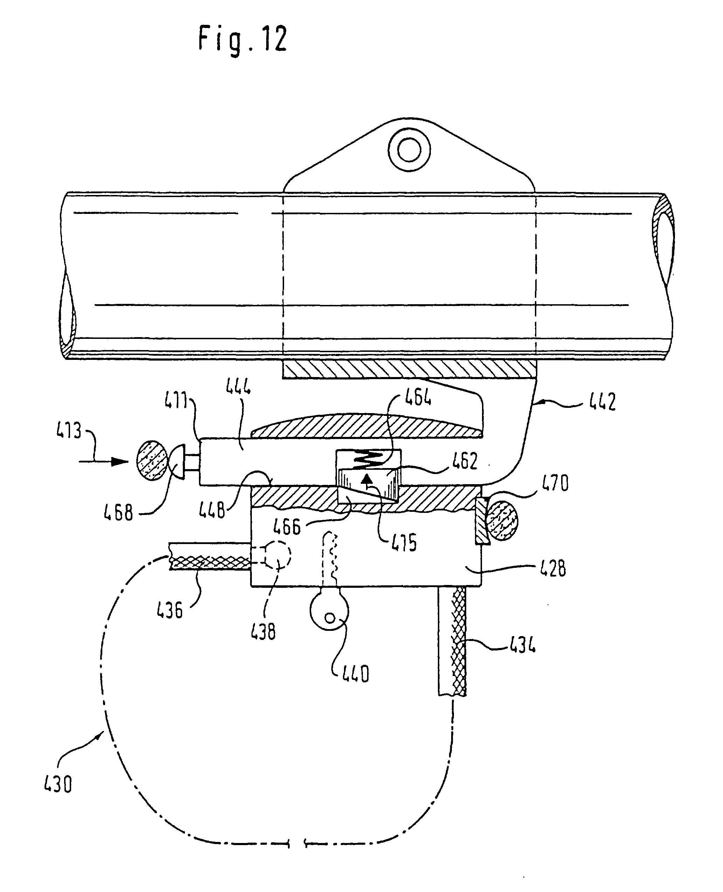

In den Fig. 11 und 12 sind weitere Ausführungsformen der Erfindung dargestellt.

In Fig. 11 ist ein fahrzeugseitiges Linearführungsmittel 342 als Führungsdorn 344 mit einer kegelstumpfartigen Anfasung 350 ausgebildet. Der Führungsdorn 344 weist eine Verrastungsausnehmung 366 auf. An einem Kupplungsteil 328 eines Spiralkabelschlosses 330 ist eine Verrastungsnase 362 in der in Fig. 11 dargestellten, verrastenden Stellung mittels einer nicht gezeigten Feder vorgespannt. Es sei nun angenommen, daß der Kupplungsteil 328 mit seinem Führungskanal 348 auf den Führungsdorn 344 aufgeschoben wird. Dann wird die Verrastungsnase 362 vorübergehend nach unten zurückgeschoben und schnappt dann in die Verrastungsausnehmung 366 ein. Eine Relativbewegung zwischen Führungsdorn 344 und Kupplungsteil 328 ist unterbunden. Um das Spiralkabelschloß 330 von dem an einem Rahmenrohr 318 angebrachten Zwischenkupplungsstück 324 zu lösen, wird ein Schieber 368 mittels Fingerdruck in Richtung des Pfeils 367 relativ zum Kupplungsteil 328 verschoben, wodurch die mit dem Schieber 368 gekoppelte Verrastungsnase 362 in Richtung des Pfeils 369 eingezogen wird, so daß die Verrastungsnase 362 außer Eingriff mit der Verrastungsausnehmung 366 gelangt. Das Kupplungsteil 328 läßt sich dann durch fortgesetzte Fingereinwirkung auf den Schieber 368 von dem Führungsdorn 344 in Richtung des Pfeils 367 abziehen.

Bei der in Fig. 12 dargestellten Ausführungsform ist ein Kupplungsteil 428 eines Spiralkabelschlosses 430 mit einem Führungskanal 448 auf einen Führungsdorn 444 eines Linearführungsmittels 442 aufgeschoben. Der Führungsdorn 444 und der Führungskanal 448 haben wieder die elliptische Querschnittsform. Im Führungskanal 448 ist eine Verrastungsausnehmung 466 ausgebildet, in die eine im Führungsdorn 444 federnd gelagerte Verrastungsnase 462 eingreift. Die Verrastungsnase 462 ist mittels einer Feder 464 in die in Fig. 12 gezeigte Verrastungsstellung vorgespannt. Um die Verrastungsnase 462 beim Aufschieben des Kupplungsteils 428 zum Aufschieben vorübergehend aus der verrastenden Stellung auszuheben, ist die Verrastungsnase 462 zum freien Ende 411 des Führungsdorns 444 hin abgeschrägt.

Zum Lösen des Spiralkabelschlosses 430 von dem Zwischenkupplungsstück 424 und damit von dem Fahrradrahmen ist am freien Ende 411 des Führungsdorns 444 eine Lösetaste 468 vorgesehen, die mittels Fingerdruck in Richtung des Pfeils 413 in den Führungsdorn 444 eingedrückt wird, wodurch die mit der Lösetaste 468 gekoppelte Verrastungsnase 462 aus der verrastenden Stellung in die entrastende Stellung in Pfeilrichtung 415 in den Führungsdorn 444 eingezogen wird und somit außer Eingriff mit der Verrastungsausnehmung 466 gelangt. Der Kupplungsteil 428 kann dann von dem Führungsdorn 444 abgezogen werden.

Um das Lösen des Kupplungsteils 428 mit einer Hand zu ermöglichen, ist an dem der Lösetaste 468 in Längsrichtung des Führungsdorns 444 entgegengesetzten Ende am Kupplungsteil 428 eine Abstützfläche 470 ausgebildet. Zum Lösen der Befestigung wird nun ein Finger, beispielsweise der Zeigefinger, an der Abstützfläche 470 abgestützt und mit dem anderen Finger, beispielsweise dem Daumen, die Lösetaste 468 eingedrückt und die Verrastungsnase 462 entrastet. Nachfolgend kann durch fortgesetzten Fingerdruck auf die Abstützfläche 470 der Kupplungsteil 428 von dem Führungsdorn 444 verschoben werden, ohne daß ein Umgreifen erforderlich ist.

## Patentansprüche

1. Lösbare Mitführbefestigung mit Zubehörteil (30), für die lösbare Befestigung des Zubehörteils (30) mittels der Mitführbefestigung an einem Fahrzeug, nämlich einem Fahrrad, unter Verwendung eines fahrzeugseitigen Verrastungsmittels (66) einerseits und eines zubehörseitigen Verrastungsmittels (52) andererseits, wobei diese Verrastungsmittel (52,66) bei Annäherung des zubehörseitigen Verrastungsmittel (52) mit dem Zubehörteil (30) im Zuge einer mittels einer Linearführung geführten Relativbewegung an eine Festlegeposition gegenüber dem fahrzeugseitigen Verrastungsmittel (66) an dem Fahrzeug ineinander verrasten und wobei ein Löseorgan (68) dem zubehörseitigen Verrastungsmittel (52) zugeordnet ist, **dadurch gekennzeichnet, daß** das Zubehörteil (30) von einem Fahrradschloß mit einem ein Schließwerk (72) aufweisenden Kupplungsteil (28) und mit einem in das Schließwerk (72) einkuppelbaren Gegenschließstück (38) gebildet ist, daß ein als ein Linearführungsdorn (44) ausgebildetes fahrzeugseitiges Linearführungsmittel (42,44,48) und ein Linearführungskanal (48) an dem mit dem Schließwerk (72) ausgerüsteten Kupplungsteil (28) als ein zubehörseitiges Linearführungsmittel (42,44,48) einer Linearführungsanordnung vorgesehen sind, und daß das Löseorgan (68) als eine Drucktaste ausgebildet ist, die im wesentlichen orthogonal zur Linearführungsrichtung beweglich ist zur Betätigung des in den Linearführungskanal (48) eindringenden zubehörseitigen Verrastungsmittel (52).

2. Lösbare Mitführbefestigung nach Anspruch 1, **dadurch gekennzeichnet, daß** das fahrzeugseitige Verrastungsmittel (66) und gegebenenfalls das fahrzeugseitige Linearführungsmittel (42,44) an einem fahrzeugseitigen Zwischenkupplungsstück (24) angebracht sind, welches lösbar an dem Fahrzeug anbringbar ist.

3. Lösbare Mitführbefestigung nach Anspruch 2, **dadurch gekennzeichnet, daß** das Zwischenkupplungsstück (24) mit einer Klemmschelle (26) zur Anbringung an mindestens einem Rahmenrohr (18) des Fahrzeugs ausgebildet ist.

4. Lösbare Mitführbefestigung nach einem der Ansprüche 1 bis 3, **dadurch gekennzeichnet, daß** das Fahrradschloß von einem Kabelschloß, insbesondere einem Spiralkabelschloß gebildet ist.

5. Lösbare Mitführbefestigung nach einem der Ansprüche 1 bis 4, **dadurch gekennzeichnet, daß** das mit dem zubehörseitigen Verrastungsmittel (52) und gegebenenfalls mit dem zubehörseitigen Linearführungsmittel (48) ausgeführte Kupplungsteil (28) länglich mit einer Längsachse parallel zu einem zugehörigen Rahmenrohr (18) des Fahrzeugs ausgestaltet ist.

6. Lösbare Mitführbefestigung nach Anspruch 5, **dadurch gekennzeichnet, daß** bei Ausführung des Fahrradschlosses (30) als Kabelschloß, insbesondere als Spiralkabelschloß, von den zwei Kabelenden (34,36) eines, vorzugsweise ein ständig mit dem länglichen Kupplungsteil (28) verbundenes Kabelende (34), in Richtung der Längsachse des länglichen Kupplungsteils (28) in dieses einläuft und ein weiteres, vorzugsweise das mit dem Gegenschließstück (38) verbundene Kabelende (36), orthogonal zur Längsachse des länglichen Kupplungsteils (28) in dieses einführbar ist.

7. Lösbare Mitführbefestigung nach Anspruch 5, **dadurch gekennzeichnet, daß** bei Ausführung des Fahrradschlosses (30) als Kabelschloß, insbesondere als Spiralkabelschloß, von den zwei Kabelenden (34,36) eines, vorzugsweise ein ständig mit dem länglichen Kupplungsteil (28) verbundenes Kabelende (34), in Richtung der Längsachse des länglichen Kupplungsteils (28) in dieses einläuft und ein weiteres mit dem Gegenschließstück (38) verbundenes Kabelende (36) antiparallel und vorzugsweise fluchtend zu dem ersten Schließkabelende (34) in den länglichen Kupplungsteil (28) einkuppelbar ist.

8. Lösbare Mitführbefestigung nach einem der Ansprüche 5 bis 7, **dadurch gekennzeichnet, daß** das an einem Zweiradrahmen (10) befestigte Schließkabel (30) wenigstens annähernd in der Ebene des Zweiradrahmens (10) liegt.

9. Lösbare Mitführbefestigung nach einem der Ansprüche 1 bis 8, **dadurch gekennzeichnet, daß** die Linearführung (42,48) annähernd parallel zu einem Rahmenrohr (18) des Fahrzeugs verläuft.

10. Lösbare Mitführbefestigung nach einem der Ansprüche 1 bis 9, **dadurch gekennzeichnet, daß** das Löseorgan (68) gegen Federwirkung aus einer Verrastungsstellung (Fig. 4) in eine Lösestellung (Fig. 6) überführbar ist.

11. Lösbare Mitführbefestigung nach einem der Ansprüche 1 bis 10, **dadurch gekennzeichnet, daß** das Löseorgan (68) im wesentlichen orthogonal zur Ebene eines Zweiradrahmens (10) beweglich ist.

12. Lösbare Mitführbefestigung nach einem der Ansprüche 4 bis 11, **dadurch gekennzeichnet, daß** das Löseorgan (68) im wesentlichen orthogonal zu einer Schlingenebene eines Spiralkabels (32) eines Fahrradschlosses (30) beweglich ist.

13. Lösbare Mitführbefestigung nach einem der Ansprüche 1 bis 12, **dadurch gekennzeichnet, daß** das Löseorgan (68) durch eine Geradführung (54) an dem Zubehörteil geführt ist.

14. Lösbare Mitführbefestigung nach einem der Ansprüche 1 bis 13, **dadurch gekennzeichnet, daß** das Löseorgan (68) eine Biegefeder (280) umfaßt, welche das zubehörseitige Verrastungsmittel (262) steuert und mit mindestens einem Ende (282,284) an dem Zubehörteil (228) gelagert ist.

15. Lösbare Mitführbefestigung nach einem der Ansprüche 1 bis 14, **dadurch gekennzeichnet, daß** der Linearführungskanal (48) gegenüber dem Linearführungsdorn (44) zumindest in der Feststellposition unverdrehbar ist.

16. Lösbare Mitführbefestigung nach einem der Ansprüche 2 bis 15, **dadurch gekennzeichnet, daß** der Linearführungsdorn (44) über einen im wesentlichen L-förmig an ihn anschließenden Trägerschenkel (46) an dem Fahrzeug bzw. dem Zwischenkupplungsstück (24) gehalten ist.

17. Lösbare Mitführbefestigung nach einem der Ansprüche 1 bis 16, **dadurch gekennzeichnet, daß** der Linearführungskanal (48) in dem Zubehörteil nahe einem Rahmenrohr (18) des Fahrzeugs verläuft, vorzugsweise zwischen dem Rahmenrohr (18) und einem Körper des Zubehörteils.

18. Lösbare Mitführbefestigung nach einem der Ansprüche 1 bis 17, **dadurch gekennzeichnet, daß** das Löseorgan (68) einstückig mit dem zubehörseitigen Verrastungsmittel (52) hergestellt ist.

19. Lösbare Mitführbefestigung nach einem der Ansprüche 1 bis 18, **dadurch gekennzeichnet, daß** das zubehörseitige Verrastungsmittel (52) eine Durchtrittsöffnung (60) aufweist, deren Rand (62) in einer Verrastungsstellung (Fig. 4) in einen Verrastungsschlitz (66) des Linearführungsdorns (44) eingreift und in einer Lösestellung (Fig. 6) aus dem Verrastungsschlitz (66) ausgehoben ist.

20. Lösbare Mitführbefestigung nach einem der Ansprüche 1 bis 19, **dadurch gekennzeichnet, daß** dem fahrzeugseitigen Verrastungsmittel (66) eine Rastmittelaushebefläche (50) zugeordnet ist, welche bei Aufschieben des zubehörseitigen Linearführungsmittels (48) auf das fahrzeugseitige Linearführungsmittel (44) das zubehörseitige Verrastungsmittel (52) vorübergehend aus einer Verrastungsstellung aushebt.

21. Lösbare Mitführbefestigung nach Anspruch 20, **dadurch gekennzeichnet, daß** bei Ausbildung des fahrzeugseitigen Linearführungsmittels als Linearführungsdorn (44) die Rastmittelaushebefläche (50) an einem freien Ende des Linearführungsdorns (44) angeordnet ist.

22. Lösbare Mitführbefestigung nach einem der Ansprüche 1 bis 21, **dadurch gekennzeichnet, daß** eine die Verrastungsmittel in Verrastungsstellung sichernde Federung (64) der Wackelsicherung für das Zubehörteil (30) gegenüber dem Fahrzeug dient.

23. Lösbare Mitführbefestigung nach einem der Ansprüche 1 bis 22, **dadurch gekennzeichnet, daß** bei Ausführung des Zubehörteils (30) mit einem Körper oder einem Gehäuse das zubehörseitige Verrastungsmittel (52) und/oder das Löseorgan (68), diese gewünschtenfalls einstückig zusammengebaut, in dem Körper bzw. dem Gehäuse (28) geführt sind.

24. Lösbare Mitführbefestigung nach Anspruch 23, **dadurch gekennzeichnet, daß** an dem Körper bzw. dem Gehäuse (28) einerseits und an dem zubehörseitigen Verrastungsmittel (52) andererseits Führungselemente (54a,58) einstückig angeformt sind.

25. Lösbare Mitführbefestigung nach Anspruch 23 oder 24, **dadurch gekennzeichnet, daß** der Körper bzw. das Gehäuse (28) aus zwei Körperteilen bzw. Gehäuseteilen (28a,28b) zusammengesetzt ist, welche zwischen sich das Verrastungsmittel (52) oder/und das Löseorgan (68), diese gewünschtenfalls zusammengebaut, aufnehmen derart, daß beim Zusammenbau der Körper- bzw. Gehäuseteile (28a,28b) die Führungselemente (54a,58) in Führungseingriff treten.

26. Lösbare Mitführbefestigung nach einem der Ansprüche 1 bis 25, **dadurch gekennzeichnet, daß** der Führungsdorn (44) und der Führungskanal (48) mit annähernd elliptischem Querschnitt ausgeführt sind.

27. Lösbare Mitführbefestigung nach einem der Ansprüche 1 bis 26, **dadurch gekennzeichnet, daß** das Zubehörteil (30) im wesentlichen gleich weit nach beiden Seiten einer Rahmenmittelebene des Zweirads auslädt.

28. Lösbare Mitführbefestigung nach einem der Ansprüche 1 bis 27, **dadurch gekennzeichnet, daß** die Beaufschlagung des Löseorgans (68) im wesentlichen ohne Querbelastung der Linearführungsmittel (44,48) möglich ist.

29. Lösbare Mitführbefestigung nach Anspruch 28, **dadurch gekennzeichnet, daß** einer Beaufschlagungsfläche des Löseorgans (68) in Bewegungsrichtung des Löseorgans (68) relativ zum Zubehörteil (30) eine Widerlagerfläche (70) am Zubehörteil (30) gegenübersteht derart, daß Löseorgan (68) und Widerlagerfläche (70) zwischen einer Daumenspitze und einer Fingerspitze, insbesondere einer Zeigefingerspitze, erfaßbar und gegeneinander annäherbar sind.

30. Lösbare Mitführbefestigung nach einem der Ansprüche 1 bis 29, **dadurch gekennzeichnet, daß** die Linearführungsmittel (42,44,48) Einfädelungsmittel (50) umfassen, welche zunächst das Einfädeln der Linearführungsmittel (42,44) erleichtern und danach eine Relativverdrehung der Linearführungsmittel (42,44,48) zur Vorbereitung des weiteren Zusammenschiebens der Linearführungsmittel (42,44,48) gestatten.

## Claims

1. A releasable attachment fixture with accessory (30), for releasably fixing the accessory (30) by means of the attachment fixture to a vehicle, namely a bicycle, using a vehicle-side latching means (66) on the one hand and an accessory-side latching means (52) on the other hand, wherein when the accessory-side latching means (52) with the accessory (30) in the course of a relative movement guided by means of a linear guide approaches a fixing position with respect to the vehicle-side latching means (66) on the vehicle said latching means (52, 66) latch into each other and wherein a release member (68) is associated with the accessory-side latching means (52), **characterised in that** the accessory (30) is formed by a bicycle lock with a coupling portion (28) having a locking mechanism (72) and with a counterpart locking portion (38) which can be coupled into the locking mechanism (72), that there are provided a vehicle-side linear guide means (42, 44, 48) which is in the form of a linear guide bar (44) and a linear guide passage (48) on the coupling portion (28) provided with the locking mechanism (72) as an accessory-side linear guide means (42, 44, 48) of a linear guide arrangement, and that the release member (68) is in the form of a pushbutton which is movable substantially orthogonally with respect to the linear guide direction for actuation of the accessory-side latching means (52) which penetrate into the linear guide passage (48).

2. A releasable attachment fixture according to claim 1 **characterised in that** the vehicle-side latching means (66) and optionally the vehicle-side linear guide means (42, 44) are mounted to a vehicle-side intermediate coupling portion (24) which can be releasably mounted to the vehicle.

3. A releasable attachment fixture according to claim 2 **characterised in that** the intermediate coupling portion (24) is provided with a clamping clip (26) for mounting to at least one frame tube (18) of the vehicle.

4. A releasable attachment fixture according to one of claims 1 to 3 **characterised in that** the bicycle lock is formed by a cable lock, in particular a spiral cable lock.

5. A releasable attachment fixture according to one of claims 1 to 4 **characterised in that** the coupling portion (28) which is provided with the accessory-side latching means (52) and optionally with the accessory-side linear guide means (28) is of an elongate configuration with a longitudinal axis parallel to an associated frame tube (18) of the vehicle.

6. A releasable attachment fixture according to claim 5 **characterised in that** when the bicycle lock (30) is in the form of a cable lock, in particular a spiral cable lock, of the two cable ends (34, 36) one, preferably a cable end (34) which is constantly connected to the elongate coupling portion (28), passes into the elongate coupling portion (28) in the direction of the longitudinal axis thereof, and a further cable end, preferably the cable end (36) connected to the counterpart locking portion (38), can be introduced into the elongate coupling portion (28) in orthogonal relationship with respect to the longitudinal axis thereof.

7. A releasable attachment fixture according to claim 5 **characterised in that** when the bicycle lock (30) is in the form of a cable lock, in particular a spiral cable lock, of the two cable ends (34, 36) one, preferably a cable end (34) which is constantly connected to the elongate coupling portion (28), passes into the elongate coupling portion (28) in the direction of the longitudinal axis thereof, and a further cable end (36) which is connected to the counterpart locking portion (38) can be coupled into the elongate coupling portion (28) in anti-parallel relationship and preferably in alignment with the first lock cable end (34).

8. A releasable attachment fixture according to one of claims 5 to 7 **characterised in that** the lock cable (30) which is fixed to a two-wheeler frame (10) is disposed at least approximately in the plane of the two-wheeler frame (10).

9. A releasable attachment fixture according to one of claims 1 to 8 **characterised in that** the linear guide (42, 48) extends approximately parallel to a frame tube (18) of the vehicle.

10. A releasable attachment fixture according to one of claims 1 to 9 **characterised in that** the release member (68) can be moved against a spring action from a latching position (Figure 4) into a release position (Figure 6).

11. A releasable attachment fixture according to one of claims 1 to 10 **characterised in that** the release member (68) is movable substantially in orthogonal relationship with the plane of a two-wheeler frame (10).

12. A releasable attachment fixture according to one of claims 4 to 11 **characterised in that** the release member (68) is movable substantially in orthogonal relationship with a plane of a loop of a spiral cable (32) of a bicycle lock (30).

13. A releasable attachment fixture according to one of claims 1 to 12 **characterised in that** the release member (68) is guided by a straight guide (54) on the accessory.

14. A releasable attachment fixture according to one of claims 1 to 13 **characterised in that** the release member (68) includes a bending spring (280) which controls the accessory-side latching means (262) and which is mounted with at least one end (282, 284) at the accessory (228).

15. A releasable attachment fixture according to one of claims 1 to 14 **characterised in that** the linear guide passage (48) is non-rotatable with respect to the linear guide bar (44) at least in the fixing position.

16. A releasable attachment fixture according to one of claims 2 to 15 **characterised in that** the linear guide bar (44) is held to the vehicle or the intermediate coupling portion (24) by way of a carrier limb (46) which joins the linear guide bar substantially in an L-shape.

17. A releasable attachment fixture according to one of claims 1 to 16 **characterised in that** the linear guide passage (48) extends in the accessory near a frame tube (18) of the vehicle, preferably between the frame tube (18) and a body of the accessory.

18. A releasable attachment fixture according to one of claims 1 to 17 **characterised in that** the release member (68) is produced in one piece with the accessory-side latching means (52).

19. A releasable attachment fixture according to one of claims 1 to 18 **characterised in that** the accessory-side latching means (52) has a through opening (60) whose edge (62) in a latching position (Figure 4) engages into a latching slot (66) of the linear guide bar (44) and in a release position (Figure 6) is lifted out of the latching slot (66).

20. A releasable attachment fixture according to one of claims 1 to 19 **characterised in that** associated with the vehicle-side latching means (66) is a detent means withdrawal surface (50) which, when the accessory-side linear guide means (48) is pushed on to the vehicle-side linear guide means (48), temporary withdraws the accessory-side latching means (52) from a latching position.

21. A releasable attachment fixture according to claim 20 **characterised in that** when the vehicle-side linear guide means is in the form of a linear guide bar (44) the detent means withdrawal surface (50) is arranged at a free end of the linear guide bar (44).

22. A releasable attachment fixture according to one of claims 1 to 21 **characterised in that** a spring means (64) for securing the latching means in the latching position serves as a wobble-prevention means for the accessory (30) with respect to the vehicle.

23. A releasable attachment fixture according to one of claims 1 to 22 **characterised in that** when the accessory (30) is designed with a body or a housing the accessory-side latching means (52) and/or the release member (68), same if desired being assembled in one piece, are guided in the body or the housing (28).

24. A releasable attachment fixture according to claim 23 **characterised in that** guide elements (54a, 58) are integrally formed on the body or the housing (28) on the one hand and on the accessory-side latching means (52) on the other hand.

25. A releasable attachment fixture according to claim 23 or claim 24 **characterised in that** the body or the housing (28) is composed of two body portions or housing portions (28a, 28b) which accommodate between them the latching means (52) and/or the release member (68), same if desired being assembled together, in such a way that when the body or housing portions (28a, 28b) are assembled the guide elements (54a, 58) come into guiding engagement.

26. A releasable attachment fixture according to one of claims 1 to 25 **characterised in that** the guide bar (44) and the guide passage (48) are of an approximately elliptical cross-section.

27. A releasable attachment fixture according to one of claims 1 to 26 **characterised in that** the accessory (30) protrudes substantially equally far towards both sides of a central plane of the frame of the two-wheeler.

28. A releasable attachment fixture according to one of claims 1 to 27 **characterised in that** actuation of the release member (68) is possible substantially without transverse loading on the linear guide means (44, 48).

29. A releasable attachment fixture according to claim 28 **characterised in that** disposed opposite to an actuation surface of the release member (68) in the direction of movement of the release member (68) relative to the accessory (30) is a support surface (70) on the accessory (30) such that the release member (68) and the support surface (70) can be gripped between the tip of a thumb and the tip of a finger, in particular the tip of an index finger, and can be moved towards each other.

30. A releasable attachment fixture according to one of claims 1 to 29 **characterised in that** the linear guide means (42, 44, 48) include threading-in means (50) which initially facilitate threading-in movement of the linear guide means (42, 44) and thereafter permit a relative rotary movement of the linear guide means (42, 44, 48) to prepare for pushing the linear guide means (42, 44, 48) further together.

## Revendications

1. Fixation mobile démontable associée à un accessoire (30), pour la fixation avec possibilité de démontage dudit accessoire (30) à un véhicule, à savoir à une bicyclette, à l'aide desdits moyens de fixation mobile, comprenant un moyen d'encliquetage (66) côté véhicule d'une part et un moyen d'encliquetage (52) côté accessoire d'autre part, les moyens d'encliquetage (52, 66) s'encliquetant l'un avec l'autre lorsque le moyen d'encliquetage (52) côté accessoire associé à l'accessoire (30), au cours d'un déplacement relatif guidé par une glissière linéaire, se rapproche d'une position de verrouillage vis-à-vis du moyen d'encliquetage (66) côté véhicule, et un organe de déverrouillage (68) étant associé au moyen d'encliquetage (52) côté accessoire, **caractérisée en ce que** l'accessoire (30) est un antivol de bicyclette avec un élément d'accouplement (28) portant une serrure (72) et avec une tête d'accouplement (38) couplable avec la serrure, **en ce qu'**il est prévu un moyen de guidage linéaire (42, 44, 48) côté véhicule, conformé en axe de guidage linéaire (44), et un canal de guidage linéaire (48) sur l'élément d'accouplement (28) muni de la serrure (72) comme moyen de guidage linéaire (42, 44, 48) côté accessoire, et **en ce que** l'organe de déverrouillage (68) est conformé en bouton à presser qui se déplace essentiellement orthogonalement à la direction de guidage linéaire aux fins d'actionner le moyen d'encliquetage (52) côté accessoire engagé dans le canal de guidage linéaire (48).

2. Fixation mobile démontable selon la revendication 1, **caractérisée en ce que** le moyen d'encliquetage (66) côté véhicule et, le cas échéant, le moyen de guidage linéaire (42, 44) côté véhicule sont disposés sur une pièce d'accouplement intermédiaire (24) côté véhicule, qui peut être fixée de manière démontable au véhicule.

3. Fixation mobile démontable selon la revendication 2, **caractérisée en ce que** la pièce d'accouplement intermédiaire (24) est pourvue d'un collier de serrage (26) pour son montage sur au moins un tube de cadre (18) du véhicule.

4. Fixation mobile démontable selon une des revendications 1 à 3, **caractérisée en ce que** l'antivol pour bicyclette est un antivol à câble, en particulier un antivol à câble enroulé en spirale.

5. Fixation mobile démontable selon une des revendications 1 à 4, **caractérisée en ce que** l'élément d'accouplement (28) comportant l'élément d'encliquetage (52) côté accessoire et le cas échéant le moyen de guidage linéaire (48) côté accessoire a une forme allongée, avec un axe longitudinal parallèle à un tube de cadre (18) correspondant du véhicule.

6. Fixation mobile démontable selon la revendication 5, **caractérisée en ce que** dans le cas d'un antivol de bicyclette (30) se présentant sous la forme d'un antivol à câble, plus particulièrement d'un antivol à câble enroulé en spirale, parmi les deux extrémités de câble (34, 36), l'une, de préférence une extrémité de câble (34) liée de manière permanente à l'élément d'accouplement (28) allongé, pénètre dans ledit élément d'accouplement (28) allongé, dans la direction de l'axe longitudinal de celui-ci, et l'autre, de préférence l'extrémité de câble (36) liée à la tête (38), peut être introduite dans l'élément d'accouplement (28) allongé, orthogonalement à l'axe longitudinal de celui-ci.

7. Fixation mobile démontable selon la revendication 5, **caractérisée en ce que** dans le cas d'un antivol de bicyclette (30) se présentant sous la forme d'un antivol à câble, plus particulièrement d'un antivol à câble enroulé en spirale, parmi les deux extrémités de câble (34, 36), l'une, de préférence une extrémité de câble (36) liée de manière permanente à l'élément d'accouplement (28) allongé pénètre dans l'élément d'accouplement (28) allongé dans la direction de l'axe longitudinal de celui-ci, et l'autre extrémité de câble (36) liée à la tête (38), peut être introduite dans l'élément d'accouplement (28) allongé de manière antiparallèle et de préférence dans l'alignement de la première extrémité d'antivol (34).

8. Fixation mobile démontable selon une des revendications 5 à 7, **caractérisée en ce que** l'antivol à câble (30) fixé à un cadre de deux roues (10) est disposé au moins approximativement dans le plan du cadre de deux roues (10).

9. Fixation mobile démontable selon une des revendications 1 à 8, **caractérisée en ce que** le moyen de guidage linéaire (42, 48) est sensiblement parallèle un tube de cadre (18) du véhicule.

10. Fixation mobile démontable selon une des revendications 1 à 9, **caractérisée en ce que** l'organe de déverrouillage (68) peut être amené à l'encontre de l'action d'un ressort d'une position encliquetée (figure 4) dans une position non encliquetée.

11. Fixation mobile démontable selon une des revendications 1 à 10, **caractérisée en ce que** l'organe de déverrouillage (68) est mobile essentiellement orthogonalement au plan d'un cadre de deux roues (10).

12. Fixation mobile démontable selon une des revendications 4 à 11, **caractérisée en ce que** l'organe de déverrouillage (68) est mobile essentiellement orthogonalement à un plan d'enroulement d'un antivol à câble (30).

13. Fixation mobile démontable selon une des revendications 1 à 12, **caractérisée en ce que** l'organe de déverrouillage (68) est guidé sur l'accessoire au moyen d'une glissière rectiligne.

14. Fixation mobile démontable selon une des revendications 1 à 13, **caractérisée en ce que** l'organe de déverrouillage (68) comprend un ressort de flexion (280), qui commande le moyen d'encliquetage (262) côté accessoire et est lié à l'accessoire (228) par au moins une extrémité (282, 284).

15. Fixation mobile démontable selon une des revendications 1 à 14, **caractérisée en ce que** le canal de guidage linéaire (48), au moins dans la position de blocage, est immobilisé en rotation par rapport à l'axe de guidage linéaire (44).

16. Fixation mobile démontable selon une des revendications 2 à 15, **caractérisée en ce que** l'axe de guidage linéaire (44) est fixé au véhicule ou à l'élément d'accouplement intermédiaire par un bras de support (46) essentiellement en forme de L.

17. Fixation mobile démontable selon une des revendications 1 à 16, **caractérisée en ce que** le canal de guidage linéaire (48) dans l'accessoire s'étend à proximité d'un tube de cadre (18) du véhicule, de préférence entre le tube de cadre (18) et un corps de l'accessoire.

18. Fixation mobile démontable selon une des revendications 1 à 17, **caractérisée en ce que** l'organe de déverrouillage (68) est réalisé d'une pièce avec le moyen d'encliquetage (52) côté accessoire.

19. Fixation mobile démontable selon une des revendications 1 à 18, **caractérisée en ce que** le moyen d'encliquetage (52) côté accessoire présente une ouverture (60), dont le bord (62), dans une position d'encliquetage (figure 4), s'engage dans une fente d'encliquetage (66) de l'axe de guidage linéaire (44) et est dégagé de la fente d'encliquetage (66) dans une position déclenchée (figure 6).

20. Fixation mobile démontable selon une des revendications 1 à 19, **caractérisée en ce qu'**au moyen d'encliquetage (66) côté véhicule est associée une surface (50) de décollement du moyen d'encliquetage qui, lors du glissement du moyen de guidage linéaire (48) côté accessoire sur le moyen de guidage linéaire (44) côté véhicule, soulève momentanément le moyen d'encliquetage côté accessoire hors d'une position d'encliquetage.

21. Fixation mobile démontable selon la revendication 20, **caractérisée en ce que** lorsque le moyen de guidage linéaire (44) côté véhicule est réalisé sous la forme d'un axe de guidage linéaire (44), la surface (50) de décollement du moyen d'encliquetage est disposée à une extrémité libre de l'axe de guidage linéaire (44).

22. Fixation mobile démontable selon une des revendications 1 à 21, **caractérisée en ce qu'**un système de ressorts (64) qui verrouille les moyens d'encliquetage dans la position encliquetée sert de sécurité aux vibrations pour l'accessoire (30) vis-à-vis du véhicule.

23. Fixation mobile démontable selon une des revendications 1 à 22, **caractérisée en ce que** lorsque l'accessoire (30) comporte un corps ou un boîtier, le moyen d'encliquetage (52) côté accessoire et/ou l'organe de déverrouillage (68), ceux-ci formant éventuellement un ensemble monobloc, sont guidés dans le corps ou le boîtier (28).

24. Fixation mobile démontable selon la revendication 23, **caractérisée en ce que** des éléments de guidage (54a, 58) sont formés d'une pièce sur le corps ou le boîtier (28) d'une part et sur le moyen d'encliquetage (52) côté accessoire d'autre part.

25. Fixation mobile démontable selon la revendication 23 à 24, **caractérisée en ce que** le corps ou le boîtier (28) est formé de deux parties de corps ou de boîtier (28a, 28b), qui enferment le moyen d'encliquetage (52) et/ou l'organe de déverrouillage (68), éventuellement assemblés, d'une manière telle que lors de l'assemblage des parties de corps ou de boîtier (28a, 28b), les éléments de guidage (54a, 58) viennent en prise pour assurer le guidage.

26. Fixation mobile démontable selon une des revendications 1 à 25, **caractérisée en ce que** l'axe de guidage (44) et le canal de guidage (48) ont une section sensiblement elliptique.

27. Fixation mobile démontable selon une des revendications 1 à 26, **caractérisée en ce que** l'accessoire (30) déborde essentiellement de la même valeur de deux côtés d'un plan médian de cadre de la bicyclette.

28. Fixation mobile démontable selon une des revendications 1 à 27, **caractérisée en ce qu'**il est possible d'actionner l'organe de déverrouillage (68) essentiellement sans sollicitation transversale des moyens de guidage linéaire (44, 48).

29. Fixation mobile démontable selon la revendication 28, **caractérisée en ce qu'**une surface de contre-appui (70) est aménagée en vis-à-vis d'une surface d'actionnement de l'organe de déverrouillage (68), vu dans la direction de déplacement dudit organe de déverrouillage (68), de telle sorte que l'organe de déverrouillage (68) et la surface de contre appui (70) puissent être saisis entre le pouce et un doigt, notamment l'index, et rapprochés l'un de l'autre.

30. Fixation mobile démontable selon une des revendications 1 à 29, **caractérisée en ce que** les moyens de guidage linéaire (42, 44, 48) comprennent des moyens d'insertion (50), qui facilitent d'abord l'insertion des moyens de guidage linéaire (42, 44), puis permettent une rotation relative desdits moyens de guidage linéaire (42, 44, 48) afin de préparer la poursuite du coulissement des moyens de guidage linéaire (42, 44, 48).
